# EUROPÄISCHE PATENTSCHRIFT

(11) **EP 1 262 275 B1**
(45) Veröffentlichungstag und Bekanntmachung des Hinweises auf die Patenterteilung: **13.07.2005**
(21) Anmeldenummer: 01113044.0
(22) Anmeldetag: 29.05.2001
(51) Int. Cl.: B23Q 1/54, B23Q 1/52

(54) **Werkstückhalteeinrichtung für Bearbeitungsmaschinen, insbesondere Fräs- und/oder Bohrmaschinen**
Workpiece holder for machine tools, in particular milling and drilling machines
Dispositif de support d' une pièce pour des machines d'usinage, en particulier pour les machines à fraiser et à forer

(43) Veröffentlichungstag der Anmeldung: 04.12.2002
(73) Patentinhaber: Maschinenfabrik Berthold Hermle Aktiengesellschaft, D-78559 Gosheim (DE)
(72) Erfinder: Schwörer, Tobias, Dipl.-Ing. (FH), 78598 Königsheim (DE); Bernhard, Franz-Xaver, 78549 Spaichingen (DE)
(74) Vertreter: Vetter, Hans, Dipl.-Phys. Dr.

(56) Entgegenhaltungen:
- EP-A- 0 305 944
- EP-A- 0 712 682
- EP-A- 0 744 244
- CH-A- 339 458
- DE-A- 3 624 284
- DE-C- 19 527 507
- US-A- 4 687 901
- PATENT ABSTRACTS OF JAPAN vol. 009, no. 223 (M-411), 10. September 1985 (1985-09-10) & JP 60 080536 A (MATSUMOTO KIKAI KK), 8. Mai 1985 (1985-05-08)

## Beschreibung

Die Erfindung betrifft eine Werkstückhalteeinrichtung für Bearbeitungsmaschinen, insbesondere für Fräs- und/oder Bohrmaschinen, gemäß dem Oberbegriff des Anspruchs 1.

Die Verwendung derartiger Schwenkbrücken als Werkstückhalterungen für Bearbeitungsmaschinen ist beispielsweise aus der EP 0712682 oder der DE 3624284 C2 bekannt. Der Antriebsmotor ist jeweils außen an einer der beiden Lagerwandungen, also außerhalb des Arbeitsbereichs, angeordnet, um ihn gegen bei der Bearbeitung anfallende Späne sowie Schmier- und Kühlmittel zu schützen. Dieser außen angeordnete Antriebsmotor treibt dort einen der Lagerzapfen an, so dass das gesamte Antriebsmoment vom Lagerzapfen auf die Schwenkbrücke übertragen werden muss. Vor allem bei der Präzisionsbearbeitung hat sich die Torsion des Lagerzapfens als nachteilig erwiesen, da sich Auswirkungen auf die Positionsgenauigkeit und das Laufverhalten ergeben.

Aus der EP 0 744 244 A ist eine Werkstückhalteeinrichtung gemäß dem Oberbegriff des Anspruchs 1 bekannt. Die Torsion auf den Lagerzapfen wird dadurch verhindert, dass die Schwenkbrücke direkt mittels eines Riemenantriebs innerhalb der Lagerwandungen angetrieben wird. Ein solcher Riemenantrieb ist jedoch sehr unpräzise und darüber hinaus können Bearbeitungsrückstände in den Antriebsbereich gelangen und zu Störungen oder Ungenauigkeiten führen.

Aus der US 4,687,901 A ist zwar ein entsprechender Zahnradantrieb für eine Schwenkbrücke bekannt, die allerdings als Werkzeughalteeinrichtung dient, jedoch sind auch hier keine Mittel vorgesehen, die Zahnräder so zu schützen, dass Bearbeitungsrückstände keine Beeinträchtigung der Funktionsweise verursachen können.

Eine Aufgabe der vorliegenden Erfindung besteht darin, eine Werkstückhalteeinrichtung der eingangs genannten Gattung so zu verbessern, dass bei außen liegendem Antriebsmotor Drehmomente auf die Lagerzapfen vermieden werden und dennoch ein Schutz der Antriebsräder gegen Bearbeitungsrückstände, wie Späne oder dgl. gewährleistet ist.

Diese Aufgabe wird erfindungsgemäß durch eine Werkstückhalteeinrichtung mit den Merkmalen des Anspruchs 1 gelöst.

In vorteilhafter Weise wird daher nicht ein Lagerzapfen, sondern die Schwenkbrücke direkt über ihren Antriebszahnkranz angetrieben, so dass sich ein kurzer Kräftefluss und keinerlei Torsionsbeanspruchung der Lagerzapfen ergibt. Dies führt zu einem besseren Laufverhalten und zu einer größeren Positioniergenauigkeit. Die Lagerzapfen können hinsichtlich der präzisen Lagerung ohne Rücksicht auf die Antriebsmittel optimiert werden. Dabei greift der Antriebszahnkranz in vorteilhafter Weise in eine ring- oder scheibenförmige Ausnehmung an der Innenseite der Lagerwandung wenigstens teilweise an, so dass er weitgehend gegenüber Bearbeitungsrückständen, wie Spänen oder dergleichen, geschützt ist. Dadurch, dass der Antriebszahnkranz an einem scheibenartigen Bereich der Schwenkbrücke angebracht oder angeformt ist, insbesondere an dessen zur Lagerwandung hinweisenden Flachseite, dient der scheibenartige Bereich somit nicht nur als Halteaufnahme für den Zahnkranz, sondern zusätzlich zur Abschirmung gegenüber dem Arbeitsbereich, insbesondere wenn er in die Ausnehmung eingreift.

Durch die in den Unteransprüchen aufgeführten Maßnahmen sind vorteilhafte Weiterbildungen und Verbesserungen der im Anspruch 1 angegebenen Werkstückhalteeinrichtung möglich.

Der Antriebsmotor und/oder eine von ihm angetriebene, mit dem Antriebszahnrad versehene Antriebswelle greift wenigstens teilweise von der Außenseite her durch die Lagerwandung hindurch. Dadurch ist eine leichte Demontage des Antriebs für die Schwenkbrücke möglich, indem beispielsweise der Antriebsmotor von der Lagerwandung gelöst und aus ihr nach außen zusammen mit dem Antriebszahnrad herausgezogen wird.

Der Zahnkranz und das Antriebszahnrad sind zweckmäßigerweise miteinander verzahnt oder über einen Antriebsstrang, wie eine Antriebskette oder einen Zahnriemen, miteinander verbunden.

Zur noch besseren Abdichtung des Zahnantriebs gegenüber dem Arbeitsbereich ist in vorteilhafter Weise ein Abdichtring zur Abdichtung des Antriebszahnkranzes und/oder des Antriebszahnrads zwischen dem scheibenförmigen Bereich der Schwenkbrücke und der Innenseite der entsprechenden Lagerwandung angeordnet, wobei die Anlagefläche zwischen dem Abdichtring und dem scheibenförmigen Bereich oder der Innenseite der Lagerwandung vorzugsweise als Gleit- und/oder Labyrinthdichtungsfläche ausgebildet ist. Hierdurch kann der Zahnkranz bzw. das Antriebszahnrad auch gegen für die Bearbeitung benötigte Flüssigkeiten und Schmierstoffe sicher geschützt bzw. abgedichtet werden.

In einer vorteilhaften Ausgestaltung der Erfindung enthält wenigstens einer der insbesondere in Lagerbuchsen gelagerten Lagerzapfen eine konzentrische, motorisch angetriebene Antriebswelle, die über einen in oder an der Schwenkbrücke geführten Antriebsstrang wenigstens einen drehbar an der Schwenkbrücke gelagerten Werkstücktisch antreibt. Ein solcher, prinzipiell aus dem eingangs angegebenen Stand der Technik bekannter Antrieb für einen drehbar an der Schwenkbrücke gelagerten Werkstücktisch durch den Lagerzapfen hindurch lässt sich wesentlich einfacher realisieren, wenn erfindungsgemäß der Lagerzapfen nicht zum Schwenkantrieb der Schwenkbrücke selbst benötigt wird.

Der Antriebsmotor für die Antriebswelle im Lagerzapfen ist an diesem drehfest fixiert, so dass die Schwenkbewegung der Schwenkbrücke von der Drehbewegung des Werkstücktisches entkoppelt ist.

Die Torsion der Schwenkbrücke durch Antriebskräfte kann noch weiter dadurch reduziert werden, dass die Schwenkbrücke zwei Zahnkränze im Bereich der Innenseiten der beiden Lagerwandungen besitzt, und dass zwei Antriebsmotoren zum synchronen Antrieb dieser beiden Zahnkränze vorgesehen sind.

Der Durchmesser des Zahnkranzes ist in vorteilhafter Weise wesentlich größer als der Durchmesser des Antriebszahnrads, was zur Erhöhung der Präzision bei der Positionierung der Schwenkbrücke beiträgt. Darüber hinaus kann für den Antriebsmotor ein Getriebe mit einer sehr geringen Untersetzung gewählt werden, oder es kann sogar auf ein solches Untersetzungsgetriebe ganz verzichtet werden.

Ein Ausführungsbeispiel der Erfindung ist in der Zeichnung dargestellt und in der nachfolgenden Beschreibung näher erläutert. Es zeigen:
- Fig. 1: eine schematische Gesamtdarstellung einer zwischen zwei Lagerwandungen schwenkbar gelagerten Schwenkbrücke als Ausführungsbeispiel der Erfindung und
- Fig. 2: eine detailliertere Darstellung der Antriebsanordnung an der linken Lagerwandung.

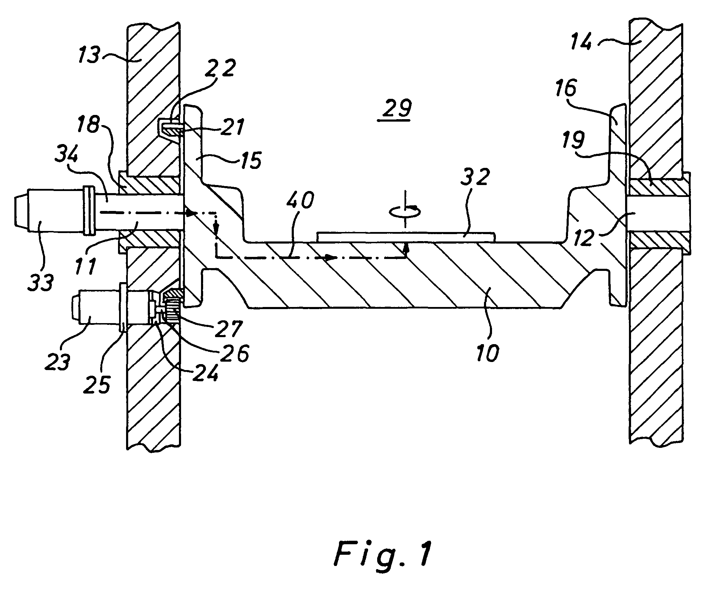

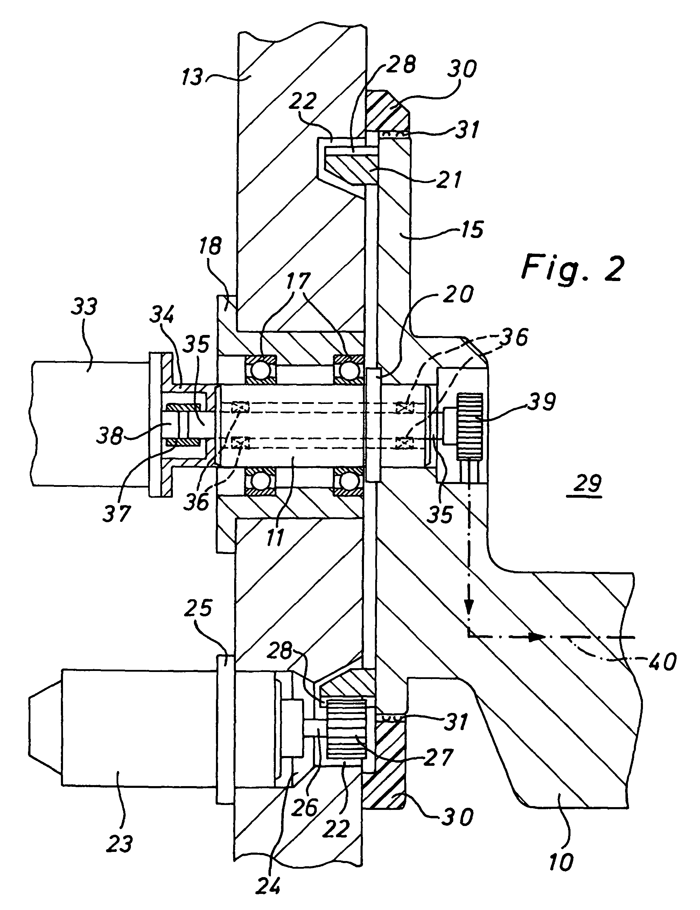

Die in den Figuren 1 und 2 dargestellte Werkstückhalteeinrichtung für Bearbeitungsmaschinen, wie Fräsmaschinen oder Bohrmaschinen, besteht im Wesentlichen aus einer Schwenkbrücke 10, die an ihren beiden entgegengesetzten Endbereichen zwei in entgegengesetzte Richtungen weisende Lagerzapfen 11, 12 besitzt. Die Schwenkbrücke 10 ist mittels dieser Lagerzapfen 11, 12 schwenkbar an zwei beabstandet voneinander angeordneten Lagerwandungen 13, 14 gelagert. Bei diesen Lagerwandungen 13, 14 kann es sich um Seitenwandungen der Bearbeitungsmaschine handeln oder um Seitenwandungen einer speziellen Halteeinrichtung für die Schwenkbrücke 10.

Die beiden Lagerzapfen 10, 11 sind an zwei scheibenartigen Endbereichen 15, 16 der Schwenkbrücke 10 angeordnet, die jeweils unmittelbar neben und parallel zu den Lagerwandungen 13, 14 positioniert sind. Wie aus der detaillierteren Darstellung gemäß Figur 2 hervorgeht, sind die Lagerzapfen 11, 12 mittels Wälzlagern 17 in Lagerbuchsen 18, 19 gelagert, die jeweils in entsprechende Ausnehmungen in den Lagerwandungen 13, 14 eingesetzt sind. Die Lagerzapfen 11, 12 greifen dabei jeweils in die scheibenartigen Endbereiche 15, 16 ein und sind an diesen mittels Flanschen 20 fixiert.

An der zur Lagerwandung 13 hinweisenden Außenseite des linken scheibenartigen Endbereichs 15 ist ein Zahnkranz 21 montiert, beispielsweise in nicht näher dargestellter Weise verschraubt oder verstiftet. Dieser Zahnkranz 21 greift in eine entsprechende ringförmige Ausnehmung 22 in der linken Lagerwandung 13 ein. Ein erster Antriebsmotor 23 zum Verschwenken der Schwenkbrücke 10 ist von außen her in eine entsprechende Halteausnehmung 24 der linken Lagerwandung 13 eingesetzt und mittels eines Halteflansches 25 fixiert. Ein von einer Antriebswelle 26 des ersten Antriebsmotors 23 angetriebenes Antriebszahnrad 27 steht in Zahneingriff mit der radial nach außen weisenden Zahnung 28 des Zahnkranzes 21. Das Antriebszahnrad 27 befindet sich in der Verlängerung der Halteausnehmung 24, in die der erste Antriebsmotor 23 teilweise eingreift. Nach Lösen des Halteflansches 25 kann der erste Antriebsmotor 23 zusammen mit dem Antriebszahnrad 27 nach außen aus der linken Lagerwandung 13 herausgezogen werden.

Anstelle eines Zahneingriffs zwischen dem Antriebszahnrad 27 und dem Zahnkranz 21 kann zur Antriebsübertragung auch eine Antriebskette, ein Zahnriemen oder dergleichen dienen.

Zum Schutz der im Wesentlichen aus dem Zahnkranz 21 und dem Antriebszahnrad 27 bestehenden Antriebsvorrichtung gegen Bearbeitungsrückstände wie Späne oder gegen Schmier- und Kühlstoffe, die im Arbeitsbereich 29 zwischen den beiden Lagerwandungen 13, 14 anfallen, ist ein Abdichtring 30 vorgesehen, der an der linken Lagerwandung 13 fixiert ist und den scheibenartigen Endbereich 15 der Schwenkbrücke 10 derart umgreift, dass auch noch das Antriebszahnrad 27 eingeschlossen ist. Dieser Abdichtring 30 steht über eine Gleitdichtungsfläche 31 bzw. Labyrinthdichtungsfläche in Kontakt mit der radial nach außen weisenden Umfangsfläche des Endbereichs 15. Alternativ hierzu könnte der Abdichtring 30 auch am Endbereich 15 fixiert sein, wobei dann die Gleitdichtungsfläche 31 zwischen dem Abdichtring 30 und der zum Arbeitsbereich 29 hinweisenden Innenfläche der linken Lagerwandung 13 gebildet wird.

An der Schwenkbrücke 10 ist ein Werkstücktisch 32 zum Aufspannen von Werkstücken drehbar gelagert, wobei die Drehachse senkrecht zur Schwenkachse der Schwenkbrücke 10 verläuft. Der Antrieb dieses Werkstücktisches 32 erfolgt in an sich bekannter Weise über einen zweiten Antriebsmotor 33, der mittels einer Anflanschglocke 34 an der freien Stirnseite des Lagerzapfens 11 angeflanscht ist. Im Innern dieses Lagerzapfens 11 ist eine Antriebswelle 35 durch Wälzlager 36 drehbar gelagert und an einem Ende über ein Anschlussstück 37 mit der Antriebswelle 38 des zweiten Antriebsmotors 33 verbunden. Das andere Ende der Antriebswelle 35 trägt ein Zahnrad 39, das über einen nicht näher dargestellten Antriebsstrang 40 den Werkstücktisch 32 antreibt. Dies kann über Antriebsketten, Zahnriemen, Zahneingriffe, Antriebswellen oder dergleichen in an sich bekannter Weise erfolgen.

Anstelle eines Werkstücktisches 32 kann die Schwenkbrücke 10 auch mehrere solcher Werkstücktische besitzen, die entweder über denselben Antrieb oder über separate Antriebe angetrieben werden. Beispielsweise kann hierzu der zweite Lagerzapfen 12 mit einer weiteren entsprechenden Antriebsvorrichtung versehen sein. In einer einfachsten Ausführung kann auch eine Schwenkbrücke 10 ohne drehbare Werkstücktische 32 realisiert sein.

Der Durchmesser des Zahnkranzes 21 ist wesentlich größer als der des Antriebszahnrads 27, so dass hierdurch auch eine Drehzahluntersetzung der Drehzahl des ersten Antriebsmotors 23 realisiert ist. Bei Bedarf kann der erste Antriebsmotor 23 noch zusätzlich über ein Untersetzungsgetriebe verfügen. Dies gilt auch für den zweiten Antriebsmotor 33.

In Abwandlung des dargestellten Ausführungsbeispiels kann der Antrieb der Schwenkbrücke 10 auch von beiden Seiten her erfolgen, um die Torsion der Schwenkbrücke 10 durch Antriebskräfte so weit wie möglich zu reduzieren. Hierzu wird auch der rechte scheibenartige Endbereich 16 mit einem dem Zahnkranz 21 entsprechenden Zahnkranz versehen, und in der rechten Lagerwandung 14 ist ebenfalls ein dem ersten Antriebsmotor 23 entsprechender Antriebsmotor vorgesehen. Die beiden Antriebsmotoren werden synchron angesteuert.

## Patentansprüche

1. Werkstückhalteeinrichtung für Bearbeitungsmaschinen, insbesondere Fräs- und/oder Bohrmaschinen, mit einer schwenkbar zwischen zwei Lagerwandungen (13, 14) gelagerten Schwenkbrücke (10), die jeweils seitlich einen Arbeitsbereich begrenzen, und mit wenigstens einem Antriebsmotor (23) zum Verschwenken der Schwenkbrücke (10), der außerhalb des Arbeitsbereichs an wenigstens einer Außenseite der Lagerwandungen (13, 14) angeordnet ist, wobei die Schwenkbrücke (10) im Bereich einer oder beider Innenseiten der Lagerwandungen (13, 14) mit Antriebsmitteln versehen ist, die mit einem vom wenigstens einen Antriebsmotor (23) angetriebenen Antriebsrad in Wirkverbindung stehen, **dadurch gekennzeichnet, dass** das Antriebsrad als Antriebszahnrad (27) ausgebildet ist, und dass die als Antriebszahnkranz (21) ausgebildeten Antriebsmittel in eine an der Innenseite der Lagerwandung (13) angeordnete, einen Schutz gegenüber Bearbeitungsrückständen bildende ring- oder scheibenförmige Ausnehmung (22) wenigstens teilweise eingreifen, und dass der Antriebszahnkranz (21) an einem scheibenartigen Bereich (15) der Schwenkbrücke (10) angebracht oder angeformt ist.

2. Werkstückhalteeinrichtung nach Anspruch 1, **dadurch gekennzeichnet, dass** der Antriebszahnkranz (21) an der zur Lagerwandung (13) hinweisenden Flachseite des scheibenartigen Bereichs (15) angebracht oder angeformt ist.

3. Werkstückhalteeinrichtung nach Anspruch 1 oder 2, **dadurch gekennzeichnet, dass** der Antriebsmotor (23) und/oder eine von ihm angetriebene, mit dem Antriebszahnrad (27) versehene Antriebswelle (26) wenigstens teilweise von der Außenseite her in die Lagerwandung (13) hinein oder durch diese hindurchgreift.

4. Werkstückhalteeinrichtung nach einem der vorhergehenden Ansprüche, **dadurch gekennzeichnet, dass** der Zahnkranz (21) und das Antriebszahnrad (27) miteinander verzahnt oder über eine Antriebskette oder einen Antriebsriemen miteinander verbunden sind.

5. Werkstückhalteeinrichtung Anspruch 4, **dadurch gekennzeichnet, dass** ein Abdichtring (30) zur Abdichtung des Antriebszahnkranzes (21) und/oder des Antriebszahnrads (27) zwischen dem scheibenförmigen Bereich (15) und der Innenseite der entsprechenden Lagerwandung (13) angeordnet ist, wobei die Anlagefläche zwischen dem Abdichtring (30) und dem scheibenförmigen Bereich (15) oder der Innenseite der Lagerwandung (13) vorzugsweise als Gleit- und/oder Labyrinthdichtungsfläche ausgebildet ist.

6. Werkstückhalteeinrichtung nach einem der vorhergehenden Ansprüche, **dadurch gekennzeichnet, dass** die Schwenkbrücke (10) zwei insbesondere in Lagerbuchsen (18, 19) gelagerte Lagerzapfen (11, 12) zur schwenkbaren Lagerung in den beiden Lagerwandungen (13, 14) besitzt.

7. Werkstückhalteeinrichtung nach Anspruch 7, **dadurch gekennzeichnet, dass** wenigstens einer der Lagerzapfen (11, 12) eine konzentrische, motorisch angetriebene Antriebswelle (35) enthält, die über einen in oder an der Schwenkbrücke (10) geführten Antriebsstrang (40) wenigstens einen drehbar an der Schwenkbrücke (10) gelagerten Werkstücktisch (32) antreibt.

8. Werkstückhalteeinrichtung nach Anspruch 8, **dadurch gekennzeichnet, dass** der Antriebsmotor (33) für die Antriebswelle (35) im Lagerzapfen (11) an diesem drehfest fixiert ist.

9. Werkstückhalteeinrichtung nach einem der vorhergehenden Ansprüche, **dadurch gekennzeichnet, dass** die Schwenkbrücke (10) zwei Zahnkränze (21) im Bereich der Innenseiten der beiden Lagerwandungen (13, 14) besitzt, und dass zwei Antriebsmotoren zum synchronen Antrieb der beiden Zahnkränze vorgesehen sind.

10. Werkstückhalteeinrichtung nach einem der vorhergehenden Ansprüche, **dadurch gekennzeichnet, dass** der Durchmesser des Zahnkranzes (21) größer als der Durchmesser des Antriebszahnrads (27) ist.

## Claims

1. Workholder for machine tools, in particular milling and/or drilling machines, with a swivel bridge (10) mounted pivotably between two bearing walls (13, 14), each bounding a working space to the side, and with one or more drive motors (23) for swivelling the swivel bridge (10) and located outside the working space on at least one outer side of the bearing walls (13, 14), wherein the swivel bridge (10) is provided in the area of one or both inner sides of the bearing walls (13, 14) with drive means which are in effective connection with a drive wheel driven by one or more drive motors (23), **characterised in that** the drive wheel is in the form of a drive gear (27), and that the drive means in the form of a drive gear rim (21) engage at least partly in an annular or disc-shaped recess (22) located on the inside of the bearing wall (13) and forming a guard against machining residues, and that the drive gear rim (21) is attached or moulded to a disc-like area (15) of the swivel bridge (10).

2. Workholder according to claim 1, **characterised in that** the drive gear rim (21) is attached or moulded to the flat side of the disc-like area (15) facing the bearing wall (13).

3. Workholder according to claim 1 or 2, **characterised in that** the drive motor (23), and/or a drive shaft (26) provided with the drive gear (27) and driven by it, reach at least partly into or through the bearing wall (13) from the outside.

4. Workholder according to any of the preceding claims, **characterised in that** the gear rim (21) and the drive gear (27) engage with one another or are connected to one another via a drive chain or a drive belt.

5. Workholder according to claim 4, **characterised in that** a seal ring (30) for sealing the drive gear rim (21) and/or the drive gear (27) is provided between the disc-like area (15) and the inside of the corresponding bearing wall (13), while the mating surface between the seal ring (30) and the disc-like area (15) or the inside of the bearing wall (13) is preferably in the form of a sliding and/or labyrinth seal surface.

6. Workholder according to any of the preceding claims, **characterised in that** the swivel bridge (10) has two pivot pins (11, 12) mounted m particular in bearing bushings (18, 19), for pivotable mounting in the two bearing walls (13, 14).

7. Workholder according to claim 7, **characterised in that** at least one of the pivot pins (11, 12) contains a concentric, motor-driven drive shaft (35), which drives one or more worktables (32) mounted rotatably on the swivel bridge (10) via a drive train (40) guided in or on the swivel bridge (10).

8. Workholder according to claim 8, **characterised in that** the drive motor (33) for the drive shaft (35) in the pivot pin (11) is fixed non-rotatably to the latter.

9. Workholder according to any of the preceding claims, **characterised in that** the swivel bridge (10) has two gear rims (21) in the area of the insides of the two bearing walls (13, 14), and that two drive motors are provided for synchronous driving of the two gear rims.

10. Workholder according to any of the preceding claims, **characterised in that** the diameter of the drive gear rim (21) is greater than the diameter of the drive gear (27).

## Revendications

1. Dispositif de maintien de pièce pour machine à usiner, en particulier machine à fraiser et/ou à percer, comportant un pont pivotant, monté pivotant entre deux parois de support (13, 14), qui délimitent chacune latéralement une zone de travail, et comportant au moins un moteur d'entraînement (22) pour le pivotement du pont pivotant (10), lequel est disposé à l'extérieur de la zone de travail sur au moins une face extérieure des parois de support (13, 14), le pont pivotant (10) étant pourvu, dans la zone de l'une ou des deux faces intérieures des parois de support (13, 14), de moyens d'entraînement qui sont en liaison activeavec une roue d'entraînement entraînée par le au moins un moteur d'entraînement (23), **caractérisé en ce que** la roue d'entraînement est réalisée comme roue dentée d'entraînement (27), et **en ce que** les moyens d'entraînement réalisés comme couronne dentée d'entraînement (21) s'engagent au moins en partie dans un évidement (22) en forme d'anneau ou de disque disposé sur la face intérieure de la paroi de support (13) et formant une protection contre des résidus d'usinage, et **en ce que** la couronne dentée d'entraînement (21) est placée ou formée sur une zone (15) de type disque du pont pivotant (10).

2. Dispositif de maintien de pièce selon la revendication 1, **caractérisé en ce que** la couronne dentée d'entraînement (21) est placée ou formée sur la face plate, dirigée vers la paroi de support (13), de la zone (15) de type disque.

3. Dispositif de maintien de pièce selon la revendication 1 ou 2, **caractérisé en ce que** le moteur d'entraînement (23) et/ou un arbre d'entraînement (26) entraîné par celui-ci et pourvu de la roue dentée d'entraînement (27), s'engage au moins en partie à l'intérieur de la paroi de support (13), depuis le côté extérieur, ou traverse celle-ci.

4. Dispositif de maintien de pièce selon l'une des revendications précédentes, **caractérisé en ce que** la couronne dentée (21) et la roue dentée d'entraînement (27) engrènent l'une avec l'autre ou sont reliées entre elles par une chaîne d'entraînement ou une courroie d'entraînement.

5. Dispositif de maintien de pièce selon la revendication 4, **caractérisé en ce qu'**une bague d'étanchéité (30) destinée à rendre étanche la couronne dentée d'entraînement (21) et/ou la roue dentée d'entraînement (27), est disposée entre la zone (15) en forme de disque et la face intérieure de la paroi de support (13) correspondante, la surface de contact entre la bague d'étanchéité (30) et la zone (15) en forme de disque ou la face intérieure de la paroi de support (13) étant réalisée de préférence comme surface de glissement et/ou d'étanchéité en labyrinthe.

6. Dispositif de maintien de pièce selon l'une des revendications précédentes, **caractérisé en ce que** le pont pivotant (10) possède deux tourillons (11, 12) montés en particulier dans des douilles de support (18, 19), pour le support pivotant dans les deux parois de support (13, 14).

7. Dispositif de maintien de pièce selon la revendication 7, **caractérisé en ce qu'**au moins l'un des pivots (11, 12) contient un arbre d'entraînement (35) concentrique, entraîné par un moteur, qui entraîne, par une barre d'entraînement (40) guidée dans ou sur le pont pivotant (10), au moins une table porte-pièce (32) montée tournante sur le pont pivotant (10).

8. Dispositif de maintien de pièce selon la revendication 8, **caractérisé en ce que** le moteur d'entraînement (33) pour l'arbre d'entraînement (35) dans le tourillon (11) est fixé solidairement en rotation sur celui-ci.

9. Dispositif de maintien de pièce selon l'une des revendications précédentes, **caractérisé en ce que** le pont pivotant (10) possède deux couronnes dentées (21) dans la zone des faces intérieures des deux parois de support (13, 14), et **en ce que** deux moteurs d'entraînement sont prévus pour l'entraînement synchrone des deux couronnes dentées.

10. Dispositif de maintien de pièce selon l'une des revendications précédentes, **caractérisé en ce que** le diamètre de la couronne dentée (21) est supérieur au diamètre de la roue dentée d'entraînement (27).
